# EUROPÄISCHE PATENTANMELDUNG

(11) **EP 1 388 768 A2**
(43) Veröffentlichungstag der Anmeldung: **11.02.2004**
(21) Anmeldenummer: 03017851.1
(22) Anmeldetag: 05.08.2003
(51) Int. Cl.: G05B 19/02, G01D 5/12, F15B 15/00, F15B 11/04, B23Q 1/58

(54) **Fluid-Antriebseinheit für linear bewegbare Bauteile, mit einem programmierbaren elektronischen Nockenschaltwerk**

(30) Priorität: 06.08.2002 DE 10235982
(71) Anmelder: Weiler Werkzeugmaschinen GmbH, 91448 Emskirchen (DE)
(72) Erfinder: Daum, Armin, 91364 Unterleinleiter (DE); Dietrich, Hans, 90619 Trautskirchen (DE); Werner, Siegfried, 91623 Sachsen (DE)
(74) Vertreter: Popp, Eugen, Dr.

(57) **Zusammenfassung**

Antrieb für einen linear verfahrbaren Reitstock (10) einer Drehmaschine, gekennzeichnet durch eine Hydraulik-Antriebseinheit (8) und ein über eine Steuereinheit mit dieser gekoppeltes frei programmierbares elektronisches Nockenschaltwerk (elektronischer Linearmaßstab 14).

## Beschreibung

Die Erfindung betrifft einen Antrieb für linear bewegbare Bauteile einer Werkzeugmaschine, insbesondere einen linear verfahrbaren Reitstock einer Drehmaschine.

Nachstehend soll die hier zu lösende Problematik anhand eines Reitstocks für Drehmaschinen näher erläutert werden. Der Reitstock trägt die sog. Gegenspitze, die zusammen mit einer in der Arbeitsspindel sitzenden Spitze bzw. einem Spannfutter ein Werkstück im sog. Körnerloch aufnimmt. Das Drehen zwischen den Spitzen ist das genaueste Drehverfahren, da alle Einflüsse aus ungenauen Spanneinrichtungen ausgeschaltet sind. Voraussetzung ist natürlich, dass die im Reitstock sitzende Spitze auch in der Spitzenlinie liegt. Das bedingt eine genaue Führung der die Spitze aufnehmenden Reitstockpinole und eine stabile Konstruktion des Reitstockkörpers. Der Reitstock ruht auf einem Bett und wird meistens von einem besonderem Prisma geführt, das ausschließlich für den Reitstock und sog. Setzstöcke vorgesehen ist. Das Reitstockprisma wird also nicht durch die hin- und herfahrenden Bettschlitten abgenutzt. Die Pinolenbohrung muß sehr sorgfältig ausgeführt sein. Von ihr hängt die Lage der Pinolenachse zur Spitzenlinie ab. Beide müssen sich decken, damit sich die Reitstockspitze beim Verstellen der Pinole nicht seitlich und der Höhe nach verlagert. Die Pinole wird bei herkömmlichen Universaldrehmaschinen von einer Gewindespindel verschoben. Der Reitstock mit Pinole selbst ist ebenfalls horizontal verschiebbar gelagert, wobei sich der Vorschub entweder von der Zugspindel ableiten lässt oder durch einen gesonderten Antrieb bewirkt wird. Bei diesem gesonderten Antrieb kann es sich entweder um einen elektromotorischen, hydraulischen oder pneumatischen Antrieb handeln.

Es ist augenscheinlich, dass der getrennte Antrieb von Reitstockkörper und Pinole aufwendig ist, und zwar sowohl herstellungs- als auch steuerungstechnisch. Auch haben die vorgenannten Antriebe Toleranzen zur Folge, die bei der Wegsteuerung stets berücksichtigt werden müssen.

Die gleiche Problematik tritt auch bei allen anderen linear bewegbaren Bauteilen einer Werkzeugmaschine auf, deren Vorschub von der Zugspindel abgeleitet wird, oder für deren Vorschub gesonderte Elektromotoren vorgesehen sind.

Für Reitstöcke gilt derzeit folgende Vorgehensweise:
- Grobpositionierung des Reitstockkörpers;
- Anschließende Spannfunktion durch eine separate Pinole.

Der vorliegenden Erfindung liegt demnach die Aufgabe zugrunde, den Antrieb linear bewegbarer Bauteile einer Werkzeugmaschine, insbesondere eines linear verfahrbaren Reitstocks einer Drehmaschine zu vereinfachen, und zwar sowohl herstellungs- als auch steuerungstechnisch mit der zusätzlichen Folge, dass eine exaktere Positionierung erhalten wird.

Diese Aufgabe wird erfindungsgemäß dadurch gelöst, dass der Antrieb eine Fluid-, insbesondere Hydraulik-Antriebseinheit und ein über eine Steuereinheit mit dieser gekoppeltes frei programmierbares elektronisches Nockenschaltwerk umfasst, wobei der Begriff "Fluid" auch Gase, wie Luft od. dgl. umfasst.

Die Funktionalität des erfindungsgemäßen Antriebs basiert auf einem elektronischen Nockenschaltwerk, das mittels Rüstprogramm frei programmierbar auf ein Ist-Wert-System "gelegt" werden kann. Der große Vorteil hierbei liegt darin, dass zum Verstellen des Arbeitsbereiches keinerlei mechanische Verschiebung der Nocken erforderlich ist. Nach einem Zuschalten der Versorgungsspannung ist ein Referieren des Ist-Wert-Systems (analog der einer regulären Linearachse) erforderlich. Dabei wird das linear bewegbare Bauteil, zum Beispiel ein Reitstock, in eine hintere Endlage positioniert und ein in den Maschinendaten hinterlegter Wert als neuer Referenzwert eingetragen. Die weitere Funktionalität des bewegbaren Bauteils, zum Beispiel Reitstockes, kann durch Programmierung von Hilfsfunktionen bzw. im manuellen Betrieb durch entsprechende Tastenkombinationen realisiert werden.

Herstellungstechnisch ist der erfindungsgemäße Antrieb denkbar einfach; denn zur Bewegung des Bauteils ist lediglich eine einzige Antriebseinheit, zum Beispiel Hydraulik-Antriebseinheit erforderlich. Dabei ist zu bedenken, dass neuere Werkzeugmaschinen ohnehin eine Hydraulikeinheit aufweisen, von der der entsprechende Antrieb für linear bewegbare Bauteile abgeleitet werden kann. In Bezug auf einen linear verfahrbaren Reitstock einer Drehmaschine sei erwähnt, dass die Pinole keinen gesonderten Antrieb mehr benötigt. Sie wird zusammen mit dem Reitstockkörper in Position verfahren, und zwar vorzugsweise mittels einer Hydraulik-Antriebseinheit in Form eines 2-seitig beaufschlagbaren Hydraulikzylinders, der unterhalb der Hauptspindel der Drehmaschine angeordnet und mit dem Maschinenbett einerseits und dem Reitstock andererseits gekoppelt ist.

Dadurch, dass Reitstockkörper und Pinole zu einem einheitlichen Bauteil zusammengefasst sind, ist auch die Toleranzsumme minimal.

Das elektronische Nockenschaltwerk umfasst ein mit einer hochpräzisen Teilung versehenes Lineal, das sich parallel zur Bewegungsrichtung des linear bewegten Bauteils, zum Beispiel Reitstocks erstreckt, und eine mit dem erwähnten Bauteil mitbewegte Abtasteinheit, dessen Sensorik mit der Steuereinheit für den Fluidantrieb gekoppelt ist.

Das mit der erwähnten Teilung versehene Lineal kann Teil einer gesonderten Führungsschiene, längs der ein mit dem bewegten Bauteil verbundener Lesekopf hin- und herverfahrbar ist, wobei der Lesekopf auf der Führungsschiene kugel- oder rollengelagert ist. Auch eine Gleitlagerung ist denkbar. Nur beispielhaft wird diesbezüglich auf eine bekannte Kugel- und Rollenschienenführung mit integriertem Meßsystem verwiesen. Derartige Kugel- und Rollenschienenführungen sind mit einem integrierten induktiven Längenmeßsystem lieferbar. Diese Konstruktion verbindet die Funktionen Führen und Messen zu einer Einheit. Herkömmliche Werkzeugmaschinen können damit nachgerüstet werden. Das induktive Meßsystem arbeitet berührungslos und dementsprechend wartungsfrei. Beeinträchtigungen durch Wasser, Öl, Staub, Späne etc. sind nicht zu befürchten. Auch ist das Meßsystem unempfindlich gegen Magnetstörfelder. Herkömmliche Systeme gibt es bis zu einer Länge von 4 m in einem Stück. Eine präzise Positionsbestimmung des Lesekopfs und damit des damit verbundenen Bauteils durch hochgenaue Maßverkörperung ist gepaart mit abstandscodierten Referenzmarken. Die erwähnten Kugel- und Rollenschienenführungen mit integriertem Längenmeßsystem erlauben eine Auflösung bis zu 0,25 µ.

Die im Werkzeugmaschinenbau verwendete Fluid-Antriebseinheit soll eine Bewegung des linear verfahrbaren Bauteils mit wenigstens zwei unterschiedlichen Geschwindigkeiten erlauben, insbesondere im Schleichgang einerseits und Eilgang andererseits.

Um diese Funktion mit einfachen konstruktiven Mitteln zu erhalten, weist der der Fluid-Antriebseinheit zugeordnete Fluidkreis vorzugsweise ein 3/4-Wegeventil auf, mittels dem das Antriebsfluid entweder durch einen ungedrosselten (Eilgang) oder alternativ gedrosselten (Schleichgang) Fluidpfad leitbar ist, wobei dieses 3/4-Wegeventil durch die Steuereinheit entsprechend einem vorgegebenen Wegstreckenprogramm ansteuerbar ist.

Es ist auch denkbar, in dem gedrosselten Fluidpfad oder in einem gesonderten dritten Fluidpfad ein variabel drosselbares Ventil anzuordnen, um die Geschwindigkeit des bewegbaren Bauteils längs seiner vorgegebenen Wegstrecke individuell einstellen zu können. Die Drosselstellung des Drosselventils soll vorzugsweise programmierbar sein. Neben der Geschwindigkeit des bewegbaren Bauteils lässt sich auf diese Weise auch der Anpressdruck desselben bei Anlage an einem festen Gegenstück, zum Beispiel Werkstück, einstellen. Diese Maßnahme ist insbesondere für den Antrieb eines Reitstocks von Interesse.

In bezug auf einen Reitstock gibt es einen bevorzugten frei programmierbaren Bewegungsablauf, der anhand der beigefügten Zeichnungen näher erläutert werden soll. Diese zeigt in:
- Figur 1: einen hydraulisch angetriebenen Reitstock (Reitstockkörper samt Pinole) einer Drehmaschine in schematischer Seitenansicht;
- Figur 2: einen Teil eines elektronischen Linearmaßstabs in perspektivischer Ansicht; und
- Figur 3: ein bevorzugtes Nockenfeld für die Bewegung eines hydraulisch angetriebenen Reitstocks.

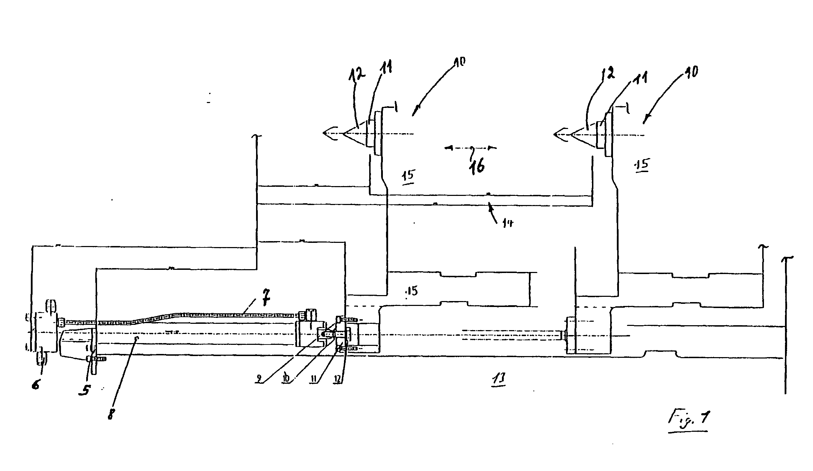

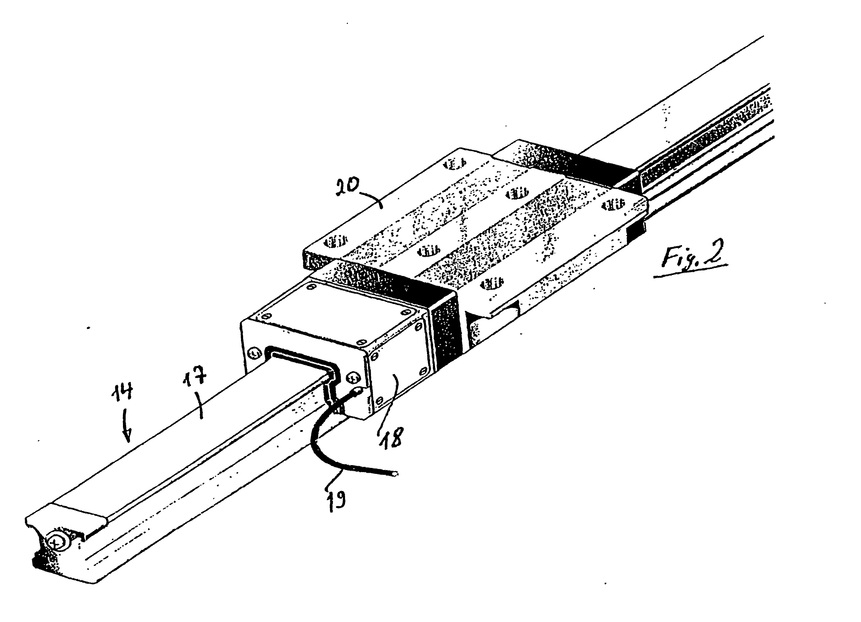

In Figur 1 ist in schematischer Seitenansicht der Reitstock 10 einer im übrigen nicht näher dargestellten Drehmaschine mit Maschinenbett 13 dargestellt, und zwar in einer vorderen und einer hinteren Position. Der Reitstock besteht aus einem Reitstockkörper 15 und einer Pinole 11 mit Körnerspitze 12. Der Reitstock 10 ist samt Pinole und Körnerspitze als Baueinheit in Richtung des Doppelpfeils 16 hin- und herverfahrbar. Zur Feststellung der Position des Reitstocks 10 ist diesem ein elektronischer Linearmaßstab 14 mit frei programmierbaren elektronischen Nocken zugeordnet. Entsprechend Figur 2 umfaßt der elektronische Linearmaßstab 14 eine Führungsschiene 17, längs der ein mit dem Reitstock 10 fest verbundener Lesekopf 18 hin- und herverfahrbar ist, wobei der Lesekopf 18 auf der Führungsschiene 17 entweder kugel- oder rollengelagert oder alternativ gleitgelagert ist. Wie bereits eingangs erwähnt, handelt es sich bei dem Lesekopf 18 um eine berührungslose Abtasteinheit mit Sensorik (im einzelnen nicht dargestellt) und Elektronik für eine Signalkonditionierung. Die Verbindung zur Elektronik erfolgt über eine Verkabelung 19.

Der Lesekopf 18 umfaßt des weiteren einen Anschlussflansch 20 zur festen Verbindung mit dem Reitstock 10. Da es sich bei dem erwähnten Linearmaßstab um ein an sich bekanntes Bauelement handelt, erübrigt sich hier eine nähere Beschreibung desselben. Kern der Überlegung ist die Verwendung eines solchen Linearmaßstabes für die Feststellung der Ist-Position sowie die Positionierung bewegter Teile einer Werkzeugmaschine, insbesondere eines Reitstocks einer Drehmaschine.

Der Antrieb des Reitstocks 10 in Richtung des Doppelpfeils 16 umfaßt des weiteren eine Hydraulik-Antriebseinheit in Form einer 2-seitig beaufschlagbaren Kolben-Zylinder-Einheit 8, deren Zylinder über einen Flansch 5 am Maschinenbett 13 und deren aus Zylinder ragendes Kolbenstangenende über einen Flansch 9 mit dem Reitstockkörper 15 verbunden ist. Die Kolben-Zylinder-Einheit 8 ist unterhalb der Hauptspindel angeordnet. Eine der Kolben-Zylinder-Einheit 8 zugeordnete Hydraulikleitung ist mit der Bezugsziffer 7 gekennzeichnet. Diese Hydraulikleitung 7 verbindet das reitstockseitige Ende des Zylinders mit einem externen Hydraulikanschluß 6. Das dem Reitstock 10 abgewandte Ende des Zylinders der Kolben-Zylinder-Einheit 8 ist ebenfalls mit der externen Hydraulik verbindbar. Der entsprechende Anschluß ist in Figur 1 verdeckt.

Wie eingangs erwähnt, umfasst der beschriebene Antrieb für den Reitstock 10 ein über eine Steuereinheit mit diesem gekoppeltes frei programmierbares elektronisches Nockenschaltwerk, wobei die elektronischen Nocken in vorbestimmten Positionen auf dem elektronischen Linearmaßstab 14 entsprechen. Dementsprechend umfasst das elektronische Nockenschaltwerk ein mit einer hochpräzisen Teilung versehenes Lineal, welches Teil der Führungsschiene 17 ist und das so angeordnet wird, dass es sich parallel zur Bewegungsrichtung des Reitstocks 10 erstreckt.

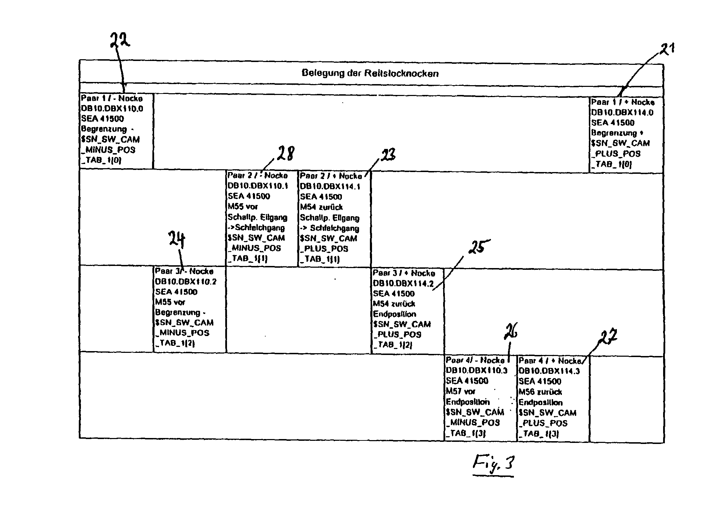

Gemäß Figur 3 ist für die Linearbewegung eines Reitstocks 10 wenigstens folgendes Nockenfeld zwischen zwei äußeren Software-Endbegrenzungsnocken 21, 22 festlegbar:
a) Bei Bewegung des Reitstocks 10 in Richtung Hauptspindel (in Figur **1** nach links)
   a1) Umschaltnocke 28 "Eilgang-Schleichgang"
   a2) Begrenzungsnocke 24 "Maximaler Druckpunkt des Reitstocks = Schleichgang bis zum Stillstand nach Anlage des Reitstocks am Werkstücks und Erreichen des maximalen Druckpunktes"
b) Bei Rückbewegung des Reitstocks 10 in Richtung von der Hauptspindel weg:
   b1) Umschaltnocke 23 "Eilgang-Schleichgang"

Zwischen den äußeren Endbegrenzungsnocken 21, 22 können noch zwei innere Wegstrecken-Grenznocken 26, 27 für die maximale Vor- und Rückbewegung des Reitstocks vorgesehen sein, wobei diese Wegstrecken-Grenznocken im Arbeitsraum frei programmierbar sind, und der normalerweise in Hauptspindelrichtung erforderliche Druckaufbau nicht erforderlich ist.

Bei Annäherung des Reitstocks 10 am Werkstück im Schleichgang und nach Kontaktierung desselben steigt der Druck in der Hydraulik bis zu einem Abschaltpunkt an, sofern bis dahin nicht die Begrenzungsnocke 24 erreicht ist. Dieser Abschaltpunkt ist der oben erwähnte maximale Druckpunkt des Reitstocks.

Figur 3 ist natürlich ein beispielhafter Aufbau eines elektronischen Nockenfeldes für einen Reitstock.

Das Nockenfeld wird durch die im Bereich "Parameter" -> "Settingdaten" -> "Sonstige" hinterlegten Positionswerte definiert. Im Regelfall sollten jedoch hier keine Eingaben durchgeführt werden, da diese eingetragenen Werte mit Aufruf des Parameterprogrammes für den Reitstock überschrieben werden. Die im Einrichtemodus ermittelten teilespezifischen Werte sollten daher immer direkt in das Parameterprogramm eingetragen werden.

### Erläuterung der Nocken

**Nocke 22**
   Endbegrenzung "Q-"
   Dieser Wert stellt die Endbegrenzung bei einer Verfahrbewegung des Reitstocks in Richtung Hauptspindel dar und stellt daher immer die äußere Begrenzung dar.
**Nocke 21**
   Endbegrenzung "Q+"
   Dieser Wert stellt die Endbegrenzung bei einer Verfahrbewegung entgegen der Richtung Hauptspindel dar und stellt daher immer die äußere Begrenzung dar.
**Nocke 28**
   Umschaltpunkt "Q-" Eilgang -> Schleichgang
   Ab diesem Positionswert erfolgt eine Reduzierung der Vorschubgeschwindigkeit auf den Schleichgang um damit das Werkstück mit dem reduzierten Moment spannen zu können. Im Automatikmodus wird dieser Umschaltpunkt mit der M55-Funktion angefahren (siehe unten).
**Nocke 23**
   Umschaltpunkt "Q+" Eilgang -> Schleichgang
   Ab diesem Positionswert erfolgt eine Reduzierung der Vorschubgeschwindigkeit auf Schleichgang um sanft auf die Abhebeposition (= Nocke 25) einfahren zu können.
   Im Automatikmodus wird dieser Umschaltpunkt mit der M54-Funktion angefahren (siehe unten).
**Nocke 24**
   Begrenzung des Schleichgangweges "Q-"
   Bis zu diesen Positionswert muß ein Druckaufbau des Reitstockes erfolgen, ansonsten wird die Vorschubbewegung mit einer entsprechenden Fehlermeldung angehalten. Der Punkt sollte direkt (in einem Abstand von ca. 5 mm) nach dem regulären Druckpunkt des Reitstocks gesetzt werden um im Fehlerfall die Vorschubbewegung sofort zu unterbrechen.
**Nocke 25**
   Abhebeposition "Q+"
   Nach einer Abhebeanforderung wird bis zu diesem Punkt vom Teil wegpositioniert. Bei einer manuellen Rückfahrbewegung wird maximal bis zu diesem Punkt ausgeführt. Wird die Rückfahranforderung vorher unterbrochen bleibt der Reitstock bereits vorher stehen. Im Automatikbetrieb wird mit M54 immer auf diesen Wert positioniert (siehe unten).
**Nocke 26**
   Freie Position kann im Automatikbetrieb mit M57 frei positioniert werden, d.h. es muß kein Druckaufbau des Reitstockes erfolgen.
**Nocke 27**
   Freie Position im Arbeitsraum "Q+"
   Auf diese Position kann im Automatikbetrieb mit M56 frei positioniert werden.

### Manuelle Bedienung

Die manuelle Bedienung erfolgt analog einer normalen NC-Achse mit folgenden Einschränkungen:
- Verfahrensgeschwindigkeit nicht mittels Vorschubkorrekturschalter einstellbar.

Eine Verfahrbewegung des Reitstockes kann manuell durch Anwahl der Achse "Q" und anschließender Betätigung der Richtungstaste "+" bzw. "-" erreicht werden. Dabei ist jedoch zu beachten, dass hiermit bereits auf die mit Lieferstand voreingestellten, bzw. anschließend kundenseitig neu definierten, Nockenpositionen verfahren wird.
Des weiteren ist manuell eine freie Positionierung im Arbeitsraum ohne Druckaufbau nur durch gleichzeitige Betätigung eines Schlüsselschalters "Einrichtebetrieb" möglich. Dabei muß jedoch die Betriebsart "Einrichten" erst nach Abwahl der Verfahranforderung abgewählt werden. Wird diese Reihenfolge nicht eingehalten und erfolgt gleichzeitig keinerlei Druckaufbau des Reitstocks, fährt dieser wieder in seine hintere Endbegrenzung zurück.

### Automatikbetrieb

Im Automatikbetrieb erfolgt der automatische Ablauf mittels Programmierung von M-Funktionen. Generell müssen vor einem Ablauf im Automatikbetrieb jedoch die Nockenposition ermittelt und in das Parameterprogramm eingetragen werden. Dieses Rüstprogramm muß am Programmanfang des Hauptprogrammes aufgerufen werden, um die Nockendaten mit den zugehörigen Werten zu versorgen.
Für die eigentlichen Positioniervorgänge des Reitstockes stehen anschließend folgende M-Funktionen zur Verfügung:
- M54: Reitstock vor
(mit Pinolenfunktion)
- M55: Reitstock zurück
(Abhebeposition anfahren)
- M56: Reitstock vor
(freie Position im Arbeitsraum ohne Druckfunktion der Pinole)
- M57: Reitstock zurück
(freie Position im Arbeitsraum)

Wie bereits eingangs erwähnt, kann statt einer Hydraulik-Antriebseinheit auch eine Pneumatik-Antriebseinheit vorgesehen sein. Beide Medien zum Antrieb sind einfacher und dementsprechend preiswerter als elektromotorische Antriebe. Vor allem muß bedacht werden, dass moderne Werkzeugmaschinen zumindest über eine maschineneigene Hydraulik bereits verfügen. Von dieser kann dann für den Antrieb zum Beispiel eines Reitstockes Gebrauch gemacht werden.

Eingangs ist auch noch erwähnt, dass der elektronische Linearmaßstab eine hochpräzise Teilung aufweist, die mittels des Lesekopfes berührungslos detektierbar ist. Insofern ist die Position des Lesekopfes und damit auch des damit verbundenen linear bewegbaren Bauteils einer Werkzeugmaschine jederzeit exakt feststellbar. Auch ist jede gewünschte Position des Lesekopfes und damit des damit verbundenen Bauteils exakt vorgebbar. Schließlich sind durch das Zusammenspiel zwischen Skalierung einerseits und Lesekopf andererseits Schaltpunkte exakt programmierbar. Diese Schaltpunkte stellen die oben erwähnten elektronischen Nocken dar.

Vorteilhaft ist, dass der erwähnte elektronische Linearmaßstab an herkömmlichen Maschinen nachrüstbar ist. Gleiches gilt für die Hydraulikeinheit zum Antrieb zum Beispiel des Reitstocks.

Natürlich muß der Hydraulikantrieb einen sog. "Druckwächter" umfassen, um Gefahrpunkt feststellen zu können. Sofern zum Beispiel nach Anlage der Körnerspitze an einem Werkstück der vorgegebene Druckpunkt nicht erreicht wird, bedeutet dies, dass die Ausladung des Werkstücks zu gering ist. Das Werkstück würde dann für eine Bearbeitung nicht ausreichend fest in axialer Richtung zwischen Spannfutter und Körnerspitze vorgespannt sein. In diesem Fall muß ein Fehlerfall gemeldet und die weitere Vorschubbewegung des Reitstocks unterbrochen werden.

Schließlich sei noch erwähnt, dass die beschriebene Konstruktion äußerst verschleißarm ist. Dies gilt sowohl für die Hydraulik als auch die berührungslose Sensorik.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- S: Flansch
- 6: Externer Hydraulikanschluß
- 7: Hydraulikleitung
- 8: Kolben-Zylinder-Einheit
- 9: Flansch
- 10: Reitstock
- 11: Pinole
- 12: Körnerspitze
- 13: Maschinenbett
- 14: elektronischer Linearmaßstab
- 15: Reitstockkörper
- 16: Doppelpfeil
- 17: Führungsschiene
- 18: Lesekopf
- 19: Verkabelung
- 20: Anschlußflansch
- 21: Endbegrenzungsnocke
- 22: Endbegrenzungsnocke
- 23: Umschaltnocke
- 24: Begrenzungsnocke
- 25: Abhebepositionsnocke
- 26: Wegstrecken-Grenznocke
- 27: Wegstrecken-Grenznocke
- 28: Umschaltnocke

## Patentansprüche

1. Antrieb für linear bewegbare Bauteile einer Werkzeugmaschine, insbesondere einen linear verfahrbaren Reitstock (10) einer Drehmaschine,
**gekennzeichnet durch**
eine Fluid-, insbesondere Hydraulik-Antriebseinheit (8) und ein über eine Steuereinheit mit dieser gekoppeltes frei programmierbares elektronisches Nockenschaltwerk.

2. Antrieb nach Anspruch 1,
**dadurch gekennzeichnet, dass**
das elektronische Nockenschaltwerk ein mit einer hochpräzisen Teilung versehenes Lineal (14), daß sich parallel zur Bewegungsrichtung des linear bewegten Bauteils erstreckt, und eine mit dem Bauteil mitbewegte Abtasteinheit (18) umfaßt, dessen Sensorik mit der Steuereinheit für die Fluid-Antriebseinheit gekoppelt ist.

3. Antrieb nach Anspruch 2,
**dadurch gekennzeichnet, dass**
das mit einer Teilung versehene Lineal (14) Teil einer Führungsschiene (17) ist, längs der ein mit dem bewegten Bauteil (zum Beispiel Reitstock 10) verbundener Lesekopf (18) hin- und herverfahrbar ist, wobei der Lesekopf (18) auf der Führungsschiene (17) entweder kugel- oder rollengelagert oder gleitgelagert ist.

4. Antrieb nach einem der Ansprüche 1 bis 3,
**dadurch gekennzeichnet, dass**
die Fluid-Antriebseinheit eine Bewegung des linear verfahrbaren Bauteils mit wenigstens zwei unterschiedlichen Geschwindigkeiten erlaubt, insbesondere im "Schleichgang" einerseits und "Eilgang" andererseits.

5. Antrieb nach Anspruch 4,
**dadurch gekennzeichnet, dass**
der der Fluid-Antriebseinheit (8) zugeordnete Fluidkreis ein 3/4-Wegeventil aufweist, mittels dem das Antriebsfluid entweder durch einen ungedrosselten (Eilgang) oder alternativ gedrosselten (Schleichgang) Fluidpfad leitbar ist, wobei dieses 3/4-Wegeventil durch die Steuereinheit entsprechend einem vorgegebenen Wegstreckenprogramm ansteuerbar ist.

6. Antrieb nach Anspruch 4 oder 5,
**dadurch gekennzeichnet, dass**
ein variabel drosselbarer Fluidpfad mit einem variabel einstellbaren Drosselventil vorgesehen ist.

7. Antrieb nach Anspruch 6,
**dadurch gekennzeichnet, dass**
die Drosselstellung des Drosselventils programmierbar ist.

8. Antrieb nach einem der Ansprüche 1 bis 7,
**dadurch gekennzeichnet, dass**
für die Linearbewegung eines Reitstocks (10) wenigstens folgendes Nockenfeld zwischen zwei äußeren Endbegrenzungsnocken (21, 22) festlegbar ist:
a) Bei Bewegung des Reitstocks (10) in Richtung Hauptspindel;
a1) Umschaltnocke (28) "Eilgang -> Schleichgang";
a2) Begrenzungsnocke (24) "Maximaler Druckpunkt des Reitstocks";
b) Bei Rückbewegung des Reitstocks (10) in Richtung von der Hauptspindel weg:
b1) Umschaltnocken (23) "Eilgang-Schleichgang"

9. Antrieb nach Anspruch 8,
**dadurch gekennzeichnet, dass**
zwischen den äußeren Endbegrenzungsnocken (21, 22) noch zwei innere Wegstrecken-Grenznocken (26, 27) für die maximale Vor- und maximale Rückbewegung des Reitstocks (10) im Arbeitsraum frei programmierbar sind, jedoch bei einer Vorwärtsbewegung keinerlei Druckaufbau erforderlich ist.

10. Antrieb nach einem der Ansprüche 8 und 9,
**dadurch gekennzeichnet, dass**
bei Annäherung des Reitstocks (10) am Werkstück im Schleichgang und nach Kontaktierung desselben der Druck in der Hydraulik bis zu einem Abschaltpunkt ansteigt, sofern bis dahin nicht die Begrenzungsnocke (24) gemäß Merkmal a2) von Anspruch 8 erreicht ist.

11. Antrieb nach einem der Ansprüche 1 bis 10,
**dadurch gekennzeichnet, dass**
er eine zweiseitig beaufschlagbare Kolben-Zylinder-Einheit (8) umfaßt, die unterhalb der Hauptspindel angeordnet und mit dem Maschinenbett (13) einerseits und linear bewegbarem Bauteil, insbesondere Reitstock (10) andererseits gekoppelt ist.
